# EUROPEAN PATENT APPLICATION

(11) **EP 2 192 359 A1**
(43) Date of publication of application: **02.06.2010**
(21) Application number: 08170105.4
(22) Date of filing: 27.11.2008
(51) Int. Cl.: F24J 2/04

(54) **Terrace**

(71) Applicant: Deceuninck NV, 8830 Hooglede-Gits (BE)
(72) Inventor: Deboutte, Bruno, B-8830, Hooglede-Gits (BE)
(74) Representative: Mooij, Johannes Jacobus

(57) **Abstract**

A terrace comprising extruded planks (1), the planks (1) comprising a tread surface (2), an opposite support or installation surface (3), supports (4) between tread surface (2) and the support surface (3) and hollow spaces (5) between the supports (4), wherein the hollow spaces (5) comprise a heat transfer agent. The invention relates in particular to a terrace of which the tread surface is cooled by water from a pool.

## Description

The invention is related to a terrace and in particular a terrace adjacent or in the vicinity of a pool.
Terraces adjacent to a pool are typically made of porous stones, wooden planks, or planks extruded from a mixture of bio fibers and a plastic material. Extruded planks may comprise a tread surface, an opposite installation or support surface in contact with a base support or foundation, supports between tread surface and support surface and hollow spaces between the supports These materials generally isolate the tread surface of the terrace thermally from the foundation upon which the terrace is placed. A well-known problem of these prior art terraces and in particular around pools is that as a result of sunshine, the temperature of the tread surface increases such that it becomes difficult or even impossible to walk barefoot over the terrace.

A substantial and continuing need exists is to provide a terrace of which the temperature increase of the tread surface due to sunshine is limited or even zero.

We have found that the problem related to increased temperature of the tread surface can be solved in that the hollow spaces of the terrace planks comprise a heat transfer agent.

As a result of the construction of the terrace planks and the heat transfer agent, heat can easily be transferred from the tread surface to the support surface and the foundation upon which the terrace is placed.

The extruded planks forming the terrace of the invention preferably comprise a composite comprising a thermoplastic resin and a biofiber; however, hollow plastic planks are envisioned as falling within the scope of the invention. The thermoplastics that can be used include polyolefins such as polyethylene or polypropylene or other thermoplastic polymers such as polyvinyl chloride, polystyrene, polyacrylic materials, or polyester materials.

In manufacturing the preferred terrace planks of the invention, the thermoplastic and fiber are blended, often in dry form, and then introduced into an extruder in which the materials are blended, melted and formed into a composite material. The terrace planks of the invention are directly extruded from the initial blending of these materials or can be first extruded in the form of a pellet which then can be introduced, in turn, into a plank forming extruder device at a later time or different location.

A variety of biofiber materials can be used in the composites of the invention. Such fibers are fibers of naturally occurring sources that have significant aspect ratio to provide structural properties of the composite. Such fibers include wood fiber, wood flour, straw, recycled fiber, pulp, or other cellulosic material. Wood fiber, in terms of abundance and suitability can be derived from either soft woods or evergreens or from hard wood, Soft woods are generally preferred for fiber manufacture because the resulting fibers are longer, contain high percentages of lignin and lower percentages of hemicellulose than hard woods. While soft wood is a primary source of fiber for the invention, additional fiber make-up can be derived from a number of secondary or fiber reclaim sources including bamboo, rice, sugar cane, and recycled fibers from newspapers, boxes, computer printouts, etc.

However, the primary source for wood fiber of this invention comprises the wood fiber by-product of sawing or milling soft woods commonly known as sawdust or milling tailings. Such wood fiber has a regular reproducible shape and aspect ratio. The fibers based on a random selection of about 100 fibers are commonly at about 0.1 to 0.5 mm in length, 0.05 to 0.1 mm in thickness and commonly have an aspect ratio of at least 2, preferably 2.5 to 5.0

Preferably the terrace planks are co-extruded, such that the hollow spaces comprise a liner of a thermoplastic. A thermoplastic liner prevents absorption of the heat transfer agent by the bio fibers. The thermoplastic resin of the liner is preferably the same thermoplastic as is used for the composite.

According to a first embodiment the heat transfer agent is water. A preferred embodiment is running water. Running water has a even better cooling efficiency on the surface of the terrace than water that just transfers the heat from the tread surface to the support surface. Water running through the hollow spaces keeps the surfaces of the terrace at a temperature that allows bare foot walking over the terrace even when the terrace surface is strongly heated by the sun.

According to another embodiment of the invention, the running water is circulated through a pool.
By circulating the running water through a pool, the pool can be heated, not only by the direct heat of the sun, but also by the heat cached by the surface of the terrace.

In a further embodiment of the invention, the amount of heat transferred from the terrace to the pool can be increased even more by isolating the installation or support surface of the terrace from the base support or foundation. Isolating the support surface from the foundation can e.g. be done by a wooden or plastic support structure between the support surface and the foundation.

### Brief description of the drawings

Figure 1 shows a terrace plank and a pipe joint
Figure 2 shows two adjacent terrace planks with an alternate embodiment of a pipe joint
Figure 3 shows a configuration of a cooled terrace

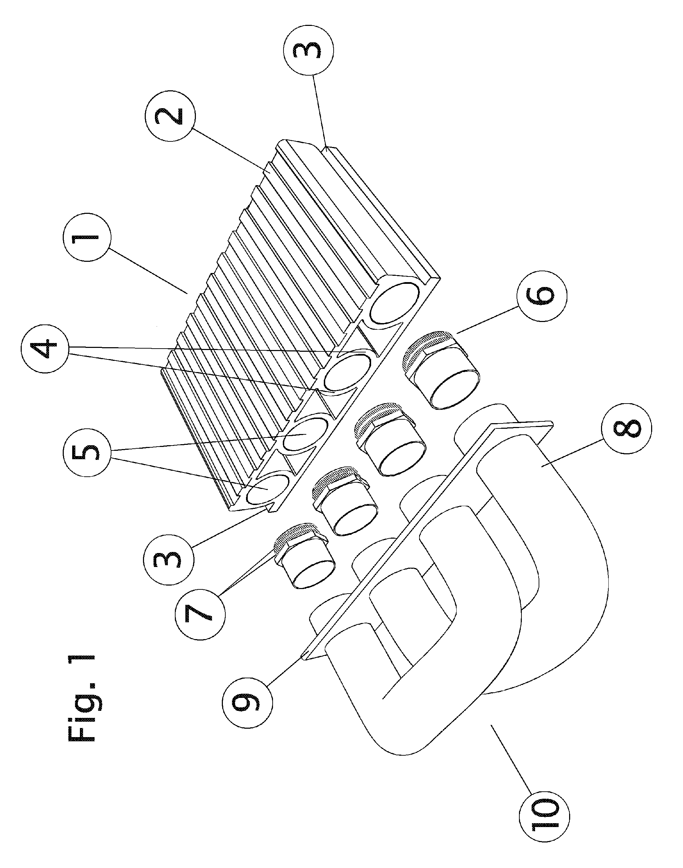

Figure 1 represents a cross sectional view of a terrace plank (1) with a tread surface (2) and a support surface (3) which is in contact with a foundation.
The planks comprise supports (4) between the tread surface and the support surface (3) and hollow spaces (5) between those supports.
Figure 1 further shows pipe joints (10), which are to be connected to the terrace planks. The pipe joint (10) comprises pipes (8), pipe supports (9) and protrusion (6). The protrusion part is foreseen of lips (7), which fit perfectly in the hollow spaces (5) of the planks to provide a solid watertight connection.

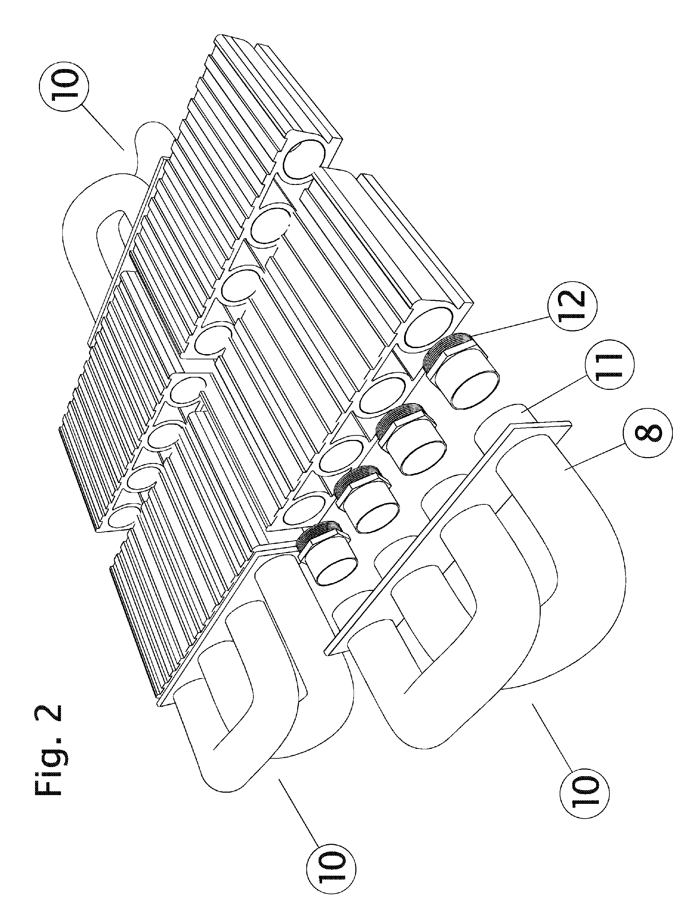

Figure 2 shows two adjacent terrace plank units with an alternate embodiment of a pipe joint. The pipe joints (10) comprise pipe screw heads (12). The pipe screw heads are connected to the pipe joints by pipe sockets (11). In this way several terrace plank units can be connected with each other to provide the desired cooling effect.

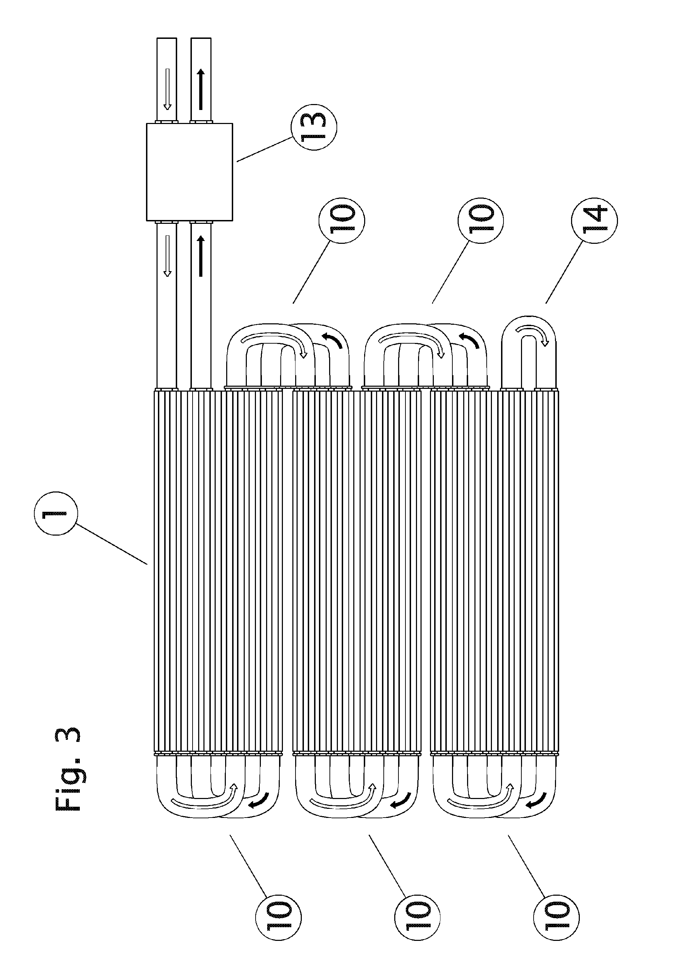

Figure 3 shows a configuration of a terrace in which a pump (13) is installed to circulate water through the hollow spaces of the terrace planks (1) via the pipe joints (10). The last terrace plank unit is foreseen of a return joint (14), which directs the water back to the pump installation.

## Claims

1. Terrace comprising extruded planks, the planks comprising a tread surface, an opposite support or installation surface, supports between tread surface and the support surface and hollow spaces between the supports, **characterized in that** the hollow spaces comprise a heat transfer agent.

2. Terrace according to claim 1, **characterized in that** the heat transfer agent is running water.

3. Terrace according to claim 2, **characterized in that** the running water is circulated through a pool.

4. Terrace according to claim 3, wherein between the support surface is isolated from a supporting layer for the terrace.
